# EUROPÄISCHE PATENTSCHRIFT

(11) **EP 0 434 854 B1**
(45) Veröffentlichungstag und Bekanntmachung des Hinweises auf die Patenterteilung: **04.08.1993**
(21) Anmeldenummer: 89123896.6
(22) Anmeldetag: 23.12.1989
(51) Int. Cl.: G01D 5/38, G01D 5/26, G01B 9/02, G01J 9/02

(54) **Einrichtung mit wenigstens einem Wellenleiterkoppler**
Device with at least one optical fibre coupler
Dispositif avec au moins un coupleur à fibres optiques

(43) Veröffentlichungstag der Anmeldung: 03.07.1991
(73) Patentinhaber: Dr. Johannes Heidenhain GmbH, D-83292 Traunreut (DE)
(72) Erfinder: Michel, Dieter, Dipl.-Ing. (FH), D-8220 Traunstein (DE); Franz, Andreas, D-8221 Kienberg (DE)

(56) Entgegenhaltungen:
- EP-A- 0 254 823
- WO-A-85/00221
- WO-A-88/09917
- GB-A- 2 163 549

## Beschreibung

Die Erfindung betrifft eine Einrichtung mit wenigstens einem Wellenleiterkoppler gemäß den Oberbegriffen der Ansprüche 1 - 3.

Derartige Wellenleiterkoppler weisen mindestens zwei Eingänge und wenigstens zwei Ausgänge auf und werden dementsprechend als 2 x 2 - Koppler, 2 x 3 - Koppler, 2 x 4 - Koppler, 3x3-Koppler etc. bezeichnet.

Ein solcher 2 x 2 - Koppler mit zwei Eingängen und zwei Ausgängen (DE-OS 36 09 507) ist jedoch bei einer lichtelektrischen Positionsmeßeinrichtung zur Messung der Relativlage zweier Objekte nicht einsetzbar, wenn zwei elektrische Signale mit einem gegenseitigen Phasenversatz ungleich 180°, beispielsweise von 90° zur Diskriminierung der Meßrichtung, gewonnen werden sollen, da an den beiden Ausgängen dieses 2 x 2 - Kopplers mittels zweier Detektoren prinzipiell nur zwei elektrische Signale mit einem gegenseitigen Phasenversatz von 180° erzeugt werden können.

Zur Diskriminierung der Meßrichtung werden bei lichtelektrischen Positionsmeßeinrichtungen daher ein 2 x 3 - Koppler gemäß der DE-PS 36 25 327, an dessen drei Ausgängen drei elektrische Signale mit einem jeweiligen gegenseitigen Phasenversatz von 120°, oder ein 2 x 4 - Koppler verwendet, an dessen vier Ausgängen vier elektrische Signale mit einem jeweiligen gegenseitigen Phasenversatz von 90° gewonnen werden können. Diese Wellenleiterkoppler mit mehr als zwei Ausgängen weisen jedoch zwei entscheidende Nachteile auf: erstens werden bei Änderungen der Koppeleigenschaften (z. B. durch Produktionsschwankungen) der Modulationsgrad und die Phasenbeziehung zwischen den Signalen an den Ausgängen beeinflußt und zweitens bewirken relative Änderungen der Amplituden der beiden Signale an den beiden Eingängen des Wellenleiterkopplers Änderungen des Modulationsgrades und der Phasenbeziehung zwischen den Signalen an den Ausgängen.

Aus der WO-A- 85/00221 ist eine Interferometeranordnung bekannt, bei der an den vier Ausgängen um 90° gegeneinander phasenverschobene elektrische Signale abnehmbar sind. Dies wird dadurch erreicht, daß die zwei Eingangslichtstrahlenbündel mittels Verzweiger geteilt und zwei parallel angeordneten Wellenleiterkopplern zugeführt werden. In einem Eingangszweig eines Wellenleiterkopplers ist ein phasenverschiebendes Element vorgesehen, mit dem die zwei Ausgangslichtstrahlenbündel dieses Wellenleiterkopplers um einen festen Wert phasenverschoben werden. Dies hat den Nachteil, daß die Eingangslichtstrahlenbündel geteilt werden müssen, daß parallele Wellenleiterkoppler notwendig sind, und daß sich eine schwierig zu realisierende Wellenleiterkreuzung ergibt.

Weiterhin sind aus der WO-A- 88/09917 sowie der GB-A- 2163549 Einrichtungen bekannt, bei denen in einem Eingang eines Wellenleiterkopplers ein phasenverschiebendes Element vorgesehen ist. Dieses phasenverschiebende Element beeinflußt aber die Phasenlage der elektrischen Signale von Detektoren am Ausgang des Wellenleiterkopplers nur dahingehend, daß die elektrischen Signale um gleiche Beträge phasenverschoben werden. Eine relative Phasenverschiebung zwischen den elektrischen Signalen ist damit nicht realisierbar.

Der Erfindung liegt die Aufgabe zugrunde, bei einer Einrichtung mit wenigstens einem Wellenleiterkoppler der genannten Gattung mit einfachen Mitteln an den Ausgängen wenigstens zwei elektrische Signale mit einem gegenseitigen Phasenversatz ungleich 180° zu erzeugen.

Diese Aufgabe wird erfindungsgemäß durch die kennzeichnenden Merkmale der Ansprüche 1 - 3 gelöst.

Die mit der Erfindung erzielten Vorteile bestehen insbesondere darin, daß durch das Vorsehen wenigstens eines Dämpfungselementes bzw. eines phasenverschiebenden Elements in wenigstens einem 2 x 2 - Koppler auf einfache Weise an seinen beiden Ausgängen wenigstens zwei elektrische Signale mit einem gegenseitigen Phasenversatz ungleich 180° mittels Detektoren erzeugt werden können, so daß dieser 2 x 2 - Koppler in Positionsmeßeinrichtungen eingesetzt werden kann, bei denen eine Diskriminierung der Meßrichtung erforderlich ist.

Vorteilhafte Ausbildungen der Erfindung entnimmt man den abhängigen Patentansprüchen.

Ausführungsbeispiele werden anhand der Zeichnung näher erläutert.

Es zeigen
- Figur 1: eine erste Einrichtung mit einem 2 x 2 - Koppler mit zwei Detektoren und einem Dämpfungselement;
- Figur 2: eine zweite Einrichtung mit einem 2 x 2 - Koppler mit vier Detektoren und einem phasenverschiebenden Element;
- Figur 3: eine dritte Einrichtung mit zwei seriell angeordneten 2 x 2 - Kopplern mit vier Detektoren und einem phasenverschiebenden Element;
- Figur 4: eine Variante der dritten Einrichtung nach Figur 3.

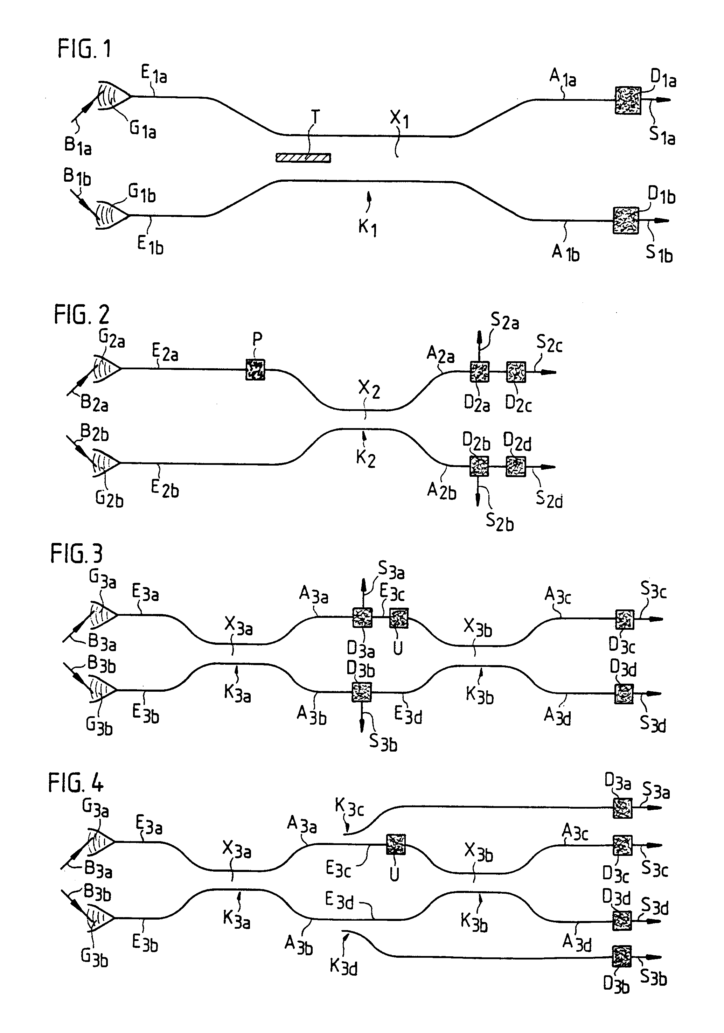

In Figur 1 ist eine erste Einrichtung mit einem Wellenleiterkoppler in Form eines integrierten optischen 2 x 2 - Kopplers K₁ gezeigt, der zwei Eingänge E₁ₐ, E_{1b} und zwei Ausgänge A₁ₐ, A_{1b} aufweist. In den ersten Eingang E₁ₐ werden über ein erstes Einkoppelgitter G₁ₐ ein erstes Lichtstrahlenbündel in Form eines ersten Beugungsstrahls B₁ₐ und in den zweiten Eingang E_{1b} über ein zweites Einkoppelgitter G_{1b} ein zweites Lichtstrahlenbündel in Form eines zweiten Beugungsstrahls B_{1b} eingespeist; die beiden Beugungsstrahlen B₁ₐ, B_{1b} gehen beispielsweise von einem Beugungsgitter einer nicht dargestellten Positionsmeßeinrichtung zur Messung der Relativlage zweier Objekte aus, die beispielsweise in der DE-PS 36 25 327 beschrieben ist. Das Einkoppeln ist auch mit Linsen oder optischen Fasern möglich; der Koppler kann auch Bestandteil eines I0C sein, z.B. eines Mach-Zehnder-Interferometers.

Im Koppelbereich X₁ des Kopplers K₁ werden die in die Eingänge E₁ₐ, E_{1b} eingespeisten optischen Signale zur Interferenz gebracht; an den beiden Ausgängen A₁ₐ, A_{1b} dieses absorptionsfreien Kopplers K₁ werden prinzipiell mittels der beiden Detektoren D₁ₐ, D_{1b} zwei elektrische Signale S₁ₐ, S_{1b} mit einem gegenseitigen Phasenversatz von 180° erzeugt.

Zur Erzeugung eines gegenseitigen Phasenversatzes ungleich 180° zwischen den beiden elektrischen Signalen S₁ₐ, S_{1b}, vorzugsweise eines gegenseitigen Phasenversatzes von 90° zur Diskriminierung der Meßrichtung, ist erfindungsgemäß im Koppelbereich X₁ ein Dämpfungselement T vorgesehen, das den gewünschten gegenseitigen Phasenversatz ungleich 180° zwischen den beiden elektrischen Signalen S₁ₐ, S_{1b} durch Verlustinduktion bewirkt. Dieses Dämpfungselement T kann z.B. aus einer angeätzten Oberfläche, aus einer absorbierenden Schicht, aus einem Photoelement oder aus einem auskoppelnden Element in Form eines Auskoppelgitters bestehen.

Dieses Dämpfungsprinzip kann auch bei Wellenleiterkopplern mit mehr als zwei Ausgängen angewandt werden.

In Figur 2 ist eine zweite Einrichtung mit einem Wellenleiterkoppler in Form eines integrierten optischen 2 x 2 - Kopplers K₂ dargestellt, der zwei Eingänge E₂ₐ, E_{2b} sowie zwei Ausgänge A₂ₐ, A_{2b} aufweist. In den ersten Eingang E₂ₐ werden über ein erstes Einkoppelgitter G₂ₐ ein erstes Lichtstrahlenbündel in Form eines ersten Beugungsstrahls B₂ₐ in zwei orthogonalen Polarisationszuständen, d. h. in einem TE-Mode und in einem TM-Mode, und in den zweiten Eingang E_{2b} über ein zweites Einkoppelgitter G_{2b} ein zweites Lichtstrahlenbündel in Form eines zweiten Beugungsstrahls B_{2b} ebenfalls in zwei orthogonalen Polarisationszuständen, d. h. in einem TE-Mode und in einem TM-Mode, eingespeist.

Zwischen dem ersten Eingang E₂ₐ und dem Koppelbereich X₂ des Kopplers K₂ ist ein phasenverschiebendes Element P vorgesehen, das die Phasen des TE-Modes und des TM-Modes um einen gegenseitigen Phasenwinkel φ (vorzugsweise 90°) verschiebt. Im Koppelbereich X₂ werden sodann die in die Eingänge E₂ₐ, E_{2b} eingespeisten optischen Signale in ihren beiden Polarisationszuständen zur Interferenz gebracht. Am ersten Ausgang A₂ₐ des Kopplers K₂ werden mittels eines ersten polarisationssensitiven Detektors D₂ₐ ein erstes elektrisches Signal S₂ₐ aus dem TE-Mode und mittels eines dritten polarisationssensitiven Detektors D_{2c} ein drittes elektrisches Signal S_{2c} aus dem TM-Mode erzeugt; zwischen dem ersten elektrischen Signal S₂ₐ und dem dritten elektrischen Signal S_{2c} besteht der gegenseitige Phasenversatz φ. Desgleichen werden am zweiten Ausgang A_{2b} mittels eines zweiten polarisationssensitiven Detektors D_{2b} ein zweites elektrisches Signal S_{2b} aus dem TE-Mode und mittels eines vierten polarisationssensitiven Detektors D_{2d} ein viertes elektrisches Signal S_{2d} aus dem TM-Mode erzeugt; zwischen dem zweiten elektrischen Signal S_{2b} und dem vierten elektrischen Signal S_{2d} besteht ebenfalls der gegenseitige Phasenversatz φ. Zwischen dem ersten elektrischen Signal S₂ₐ und dem zweiten elektrischen Signal S_{2b} sowie zwischen dem dritten elektrischen Signal S_{2c} und dem vierten elektrischen Signal S_{2d} besteht jeweils der gegenseitige Phasenversatz von 180°. Bei einem Phasenversatz φ = 90° besitzen somit die vier elektrischen Signale S₂ₐ - S_{2d} die Phasenlagen S₂ₐ = 0°, S_{2c} = 90°, S_{2b} = 180° und S_{2d} = 270°, so daß eine Diskriminierung der Meßrichtung ermöglicht wird.

Diese zweite Einrichtung weist den Vorteil auf, daß Änderungen der Koppeleigenschaften des Kopplers K₂ oder Amplitudenänderungen der Eingangssignale nur den Modulationsgrad, nicht aber die gegenseitigen Phasenlagen zwischen den vier elektrischen Signalen S₂ₐ - S_{2d} an den beiden Ausgängen A₂ₐ, A_{2b} ändern.

Figur 3 zeigt eine dritte Einrichtung mit zwei seriell miteinander verbundenen Wellenleiterkopplern in Form zweier 2 x 2 - Koppler K₃ₐ, K_{3b}, die jeweils zwei Eingänge E₃ₐ, E_{3b}; E_{3c}, E_{3d} sowie jeweils zwei Ausgänge A₃ₐ, A_{3b}; A_{3c}, A_{3d} aufweisen. In den ersten Eingang E₃ₐ des ersten Kopplers K₃ₐ werden über ein erstes Einkoppelgitter G₃ₐ ein erstes Lichtstrahlenbündel in Form eines ersten Beugungsstrahls B₃ₐ und in den zweiten Eingang E_{3b} über ein zweites Einkoppelgitter G_{3b} ein zweites Lichtstrahlenbündel in Form eines zweiten Beugungsstrahls B_{3b} eingespeist.

Im Koppelbereich X₃ₐ des ersten Kopplers K₃ₐ werden die in die Eingänge E₃ₐ, E_{3b} eingespeisten optischen Signale zur Interferenz gebracht; an den beiden Ausgängen A₃ₐ, A_{3b} des ersten Kopplers K₃ₐ wird ein Teil des Lichtes ausgekoppelt und einem ersten Detektor D₃ₐ zur Erzeugung eines ersten elektrischen Signals S₃ₐ und einem zweiten Detektor D_{3b} zur Erzeugung eines zweiten elektrischen Signals S_{3b} zugeführt, die einen gegenseitigen Phasenversatz von 180° aufweisen. Für dieses teilweise Auskoppeln sind die beiden Detektoren D₃ₐ, D_{3b} direkt auf den Wellenleitern an den Ausgängen A₃ₐ A_{3b} des ersten Kopplers K₃ₐ aufgebracht; dieses teilweise Auskoppeln kann aber auch durch nicht gezeigte Auskoppelgitter erfolgen.

Zwischen dem ersten Eingang E_{3c} des zweiten Kopplers K_{3b} und seinem Koppelbereich X_{3b} ist ein phasenverschiebendes Element U vorgesehen, das einen gegenseitigen Phasenversatz zwischen den beiden an den beiden Eingängen (E_{3c}, E_{3d}) des zweiten Kopplers K_{3b} eintretenden verbliebenen optischen Signalen bewirkt. Die beiden verbliebenen optischen Signale werden sodann im Koppelbereich X_{3b} erneut zur Interferenz gebracht, so daß am ersten Ausgang A_{3c} des zweiten Kopplers K_{3b} mittels eines dritten Detektors D_{3c} ein drittes elektrisches Signal S_{3c} und am zweiten Ausgang A_{3d} mittels eines vierten Detektors D_{3d} ein viertes elektrisches Signal S_{3d} erzeugt werden, die einen gegenseitigen Phasenversatz von 180° aufweisen. Das phasenverschiebende Element U bewirkt somit jeweils zwischen dem ersten elektrischen Signal S₃ₐ und dem dritten elektrischen Signal S_{3c} sowie zwischen dem zweiten elektrischen Signal S_{3b} und dem vierten elektrischen Signal S_{3d} einen gegenseitigen Phasenversatz φ. Bei einem Phasenversatz φ = 90° besitzen somit die vier Signale S₃ₐ - S_{3d} die Phasenlagen S₃ₐ = 0°, S_{3c} = 90°, S_{3b} = 180°, S_{3d} = 270°, so daß eine Diskriminierung der Meßrichtung ermoglicht wird. Der Phasenversatz φ kann außerdem durch eine unterschiedliche Länge oder durch eine unterschiedliche geometrische Form der beiden Wellenleiter an den beiden Eingängen E_{3c}, E_{3d} des zweiten Kopplers K_{3b} erfolgen.

In Figur 4 ist eine Variante der dritten Einrichtung nach Figur 3 mit denselben Bezugszeichen dargestellt. Das teilweise Auskoppeln der beiden Beugungsstrahlen B₃ₐ, B_{3b} in der beiden Ausgängen A₃ₐ, A3b des ersten Kopplers K₃ₐ erfolgt durch zwei weitere Koppler K_{3c}, K_{3d}, die mit den beiden ersten Detektoren D₃ₐ, D_{3b} verbunden sind.

Zur Erzeugung weiterer phasenverschobener elektrischer Signale können weitere Koppler seriell angeschlossen werden.

## Patentansprüche

1. Einrichtung mit wenigstens einem Wellenleiterkoppler, in dem an seinen Eingängen zugeführte Lichtstrahlenbündel zur Interferenz gebracht werden und an seinen Ausgängen Detektoren zur Erzeugung elektrischer Signale vorgesehen sind, die gegeneinander phasenverschoben sind, dadurch gekennzeichnet, daß zur Erzeugung wenigstens zweier elektrischer Signale (S₁ₐ, S_{1b}) mit einem gegenseitigen Phasenversatz ungleich 180° an den Ausgängen (A₁ₐ, A_{1b}) im Wellenleiterkoppler (K₁) wenigstens ein Dämpfungselement (T) vorgesehen ist.

2. Einrichtung mit wenigstens einem Wellenleiterkoppler, in dem an seinen Eingängen zugeführte Lichtstrahlenbündel zur Interferenz gebracht werden und an seinen Ausgängen Detektoren zur Erzeugung elektrischer Signale vorgesehen sind, die gegeneinander phasenverschoben sind, dadurch gekennzeichnet, daß zur Erzeugung wenigstens zweier elektrischer Signale (S₂ₐ, S_{2c}; S_{2b}, S_{2d}) mit einem gegenseitigen Phasenversatz ungleich 180° die an den Eingängen (E₂ₐ, E_{2b}) zugeführten Lichtstrahlenbündel (B₂ₐ, B_{2b}) in zwei orthogonal polarisierten TE-/TM-Moden eingespeist werden, daß in mindestens einem Eingang (E₂ₐ) ein die Phasen der TE-/TM-Moden der Lichtstrahlenbündel (B₂ₐ, B_{2b}) unterschiedlich phasenverschiebendes Element (P) vorgesehen ist und daß an den Ausgängen (A₂ₐ, A_{2b}) jeweils ein Detektor (D₂ₐ, D_{2c}; D_{2b}, D_{2d}) für jeden Mode vorgesehen ist.

3. Einrichtung mit wenigstens einem Wellenleiterkoppler, in dem an seinen Eingängen zugeführte Lichtstrahlenbündel zur Interferenz gebracht werden und an seinen Ausgängen Detektoren zur Erzeugung elektrischer Signale vorgesehen sind, die gegeneinander phasenverschoben sind, dadurch gekennzeichnet, daß zur Erzeugung wenigstens zweier elektrischer Signale (S₃ₐ, S_{3c}; S_{3b}, S_{3d}) mit einem gegenseitigen Phasenversatz ungleich 180° wenigstens zwei seriell miteinander verbundene Wellenleiterkoppler (K₃ₐ, K_{3b}) vorgesehen sind, daß an den Ausgängen (A₃ₐ, A_{3b}) des ersten Wellenleiterkopplers (K₃ₐ) erste Detektoren (D₃ₐ, D_{3b}) zur Erzeugung erster elektrischer Signale (S₃ₐ, S_{3b}) vorgesehen sind, daß in mindestens einem Eingang (E_{3c}) des zweiten Wellenleiterkopplers (K_{3b}) ein phasenverschiebendes Element (U) vorgesehen ist und daß an den Ausgängen (A_{3c}, A_{3d}) des zweiten Wellenleiterkopplers (K_{3b}) zweite Detektoren (D_{3c}, D_{3d}) zur Erzeugung zweiter elektrischer Signale (S_{3c}, S_{3d}) angeordnet sind.

4. Einrichtung nach den Ansprüchen 1 - 3, dadurch gekennzeichnet, daß der wenigstens eine Wellenleiterkoppler (K) aus einem 2 x 2-Koppler mit zwei Eingängen (Eₐ, E_{b}) und zwei Ausgängen (Aₐ, A_{b}; A_{c}, A_{d}) besteht.

5. Einrichtung nach Anspruch 1, dadurch gekennzeichnet, daß das Dämpfungselement (T) im Koppelbereich (X₁) des Wellenleiterkopplers (K₁) angeordnet ist.

6. Einrichtung nach Anspruch 1, dadurch gekennzeichnet, daß das Dämpfungselement (T) aus einer absorbierenden Schicht, aus einem Photoelement oder aus einem auskoppelnden Element besteht.

7. Einrichtung nach den Ansprüchen 1 - 3, dadurch gekennzeichnet, daß an den Eingängen (Eₐ, E_{b}) der Wellenleiterkoppler (K) Einkoppelgitter (Gₐ, G_{b}) für die Lichtstrahlenbündel (Bₐ, B_{b}) vorgesehen sind.

8. Einrichtung nach Anspruch 3, dadurch gekennzeichnet, daß an den Ausgängen (A₃ₐ, A_{3b}) des ersten Wellenleiterkopplers (K₃ₐ) weitere Koppler (K_{3c}, K_{3d}) angeordnet sind, die mit den ersten Detektoren (D₃ₐ, D_{3b}) verbunden sind.

9. Anwendung der Einrichtung nach den Ansprüchen 1 - 3 bei einer lichtelektrischen Positionsmeßeinrichtung.

## Claims

1. Device with at least one waveguide coupler in which light beams supplied at its inputs are brought to interference and detectors are provided at its outputs for generating electric signals which are displaced in phase with respect to one another, characterised in that for generating at least two electric signals (S₁ₐ, S_{1b}) with a mutual phase shift not equal to 180° at the outputs (A₁ₐ, A_{1b}), at least one attenuating element (T) is provided in the waveguide coupler (K₁).

2. Device with at least one waveguide coupler in which light beams supplied at its inputs are brought to interference and detectors are provided at its outputs for generating electric signals which are displaced in phase with respect to one another, characterised in that for generating at least two electric signals (S₂ₐ, S_{2c}; S_{2b}, S_{2d}) with a mutual phase shift not equal to 180°, the light beams (B₂ₐ, B_{2b}) supplied at the inputs (E₂ₐ, E_{2b}) are fed in in two orthogonally polarised TE/TM modes, an element (P) displacing the phases of the TE/TM modes of the light beams (B₂ₐ, B_{2b}) differently is provided in at least one input (E₂ₐ), and a detector (D₂ₐ, D_{2c}; D_{2b}, D_{2d}) for each mode is provided at each of the outputs (A₂ₐ, A_{2b}).

3. Device with at least one waveguide coupler in which light beams supplied at its inputs are brought to interference and detectors are provided at its outputs for generating electric signals which are displaced in phase with respect to one another, characterised in that for generating at least two electric signals (S₃ₐ, S_{3c}; S_{3b}, S_{3d}) with a mutual phase shift not equal to 180°, at least two waveguide couplers (K₃ₐ, K_{3b}) connected serially to one another are provided, first detectors (D₃ₐ, D_{3b}) for generating first electric signals (S₃ₐ, S_{3b}) are provided at the outputs (A₃ₐ, A_{3b}) of the first waveguide coupler (K₃ₐ), a phase displacing element (U) is provided in at least one input (E_{3c}) of the second waveguide coupler (K_{3b}), and second detectors (D_{3c}, D_{3d}) for generating second electric signals (S_{3c}, S_{3d}) are arranged at the outputs (A_{3c}, A_{3d}) of the second waveguide coupler (K_{3b}).

4. Device according to claims 1 to 3, characterised in that the at least one waveguide coupler (K) consists of a 2 x 2 coupler with two inputs (Eₐ, E_{b}) and two outputs (Aₐ, A_{b}; A_{c}, A_{d}).

5. Device according to claim 1, characterised in that the attenuating element (T) is arranged in the coupling zone (X₁) of the waveguide coupler (K₁).

6. Device according to claim 1, characterised in that the attenuating element (T) consists of an absorbing film, a photoelectric cell or a decoupling element.

7. Device according to claims 1 to 3, characterised in that coupling-in gratings (Gₐ, G_{b}) for the light beams (Bₐ, B_{b}) are provided at the inputs (Eₐ, E_{b}) of the waveguide couplers (K).

8. Device according to claim 3, characterised in that additional couplers (K_{3c}, K_{3d}) connected to the first detectors (D₃ₐ, D_{3b}) are arranged at the outputs (A₃ₐ, A_{3b}) of the first waveguide coupler (K₃ₐ).

9. Application of the device according to claims 1 to 3 in a photoelectric measuring system.

## Revendications

1. Dispositif comportant au moins un coupleur de guides d'ondes à l'intérieur duquel des faisceaux de rayons lumineux présents à ses entrées sont amenés en interférence et dont les sorties sont pourvues de capteurs destinés à produire des signaux électriques mutuellement déphasés, caractérisé par le fait que, pour produire au moins deux signaux électriques (S₁ₐ, S_{1b}) avec un déphasage mutuel différent de 180° aux sorties (A₁ₐ, A_{1b}), le coupleur (K₁) comporte au moins un organe d'atténuation (T).

2. Dispositif comportant au moins un coupleur de guides d'ondes à l'intérieur duquel des faisceaux de rayons lumineux présents à ses entrées sont amenés en intertérence et dont les sorties sont pourvues de capteurs destinés à produire des signaux électriques mutuellement déphasés, caractérisé par le fait que, pour produire au moins deux signaux électriques (S₂ₐ, S_{2c}; S_{2b}, S_{2d}) avec un déphasage mutuel différent de 180°, les faisceaux de rayons lumineux (B₂ₐ, B_{2b}) présents aux entrées (E₂ₐ, E_{2b}) sont transmis dans deux modes TE / TM à polarisation orthogonale, par le fait qu'il est prévu à une entrée (E₂ₐ) au moins un élément (P) qui produit un déphasage différent des phases des modes TE / TM des faisceaux de rayons lumineux (B₂ₐ, B_{2b}) et par le fait qu'il est prévu aux sorties (A₂ₐ, A_{2b}) un détecteur (D₂ₐ, D_{2c;} D_{2b}, D_{2c}) pour chaque mode.

3. Dispositif comportant au moins un coupleur de guides d'ondes à l'intérieur duquel des faisceaux de rayons lumineux présents à ses entrées sont amenés en intertérence et dont les sorties sont pourvues de capteurs destinés à produire des signaux électriques mutuellement déphasés, caractérisé par le fait que, pour produire au moins deux signaux électriques (S₃ₐ, S_{3c}; S_{3b}, S_{3d}) avec un déphasage mutuel différent de 180°, il est prévu au moins deux coupleurs (K₃ₐ) de guides d'ondes connectés en série, par le fait qu'il est prévu, aux sorties (A₃ₐ, A_{3b}) du premier coupleur (K₃ₐ), des premiers détecteurs (D₃ₐ, D_{3b}) afin de produire de premiers signaux électriques (S₃ₐ, S_{3b}), par le fait qu'il est prévu, à au moins une entrée (E_{3c}) du deuxième coupleur (Ki3b) de guides d'ondes, un élément déphaseur (U) et par le fait que des deuxième détecteurs (D_{3c}, D_{3d}) sont disposés aux sorties (A_{3c}, A_{3d}) du deuxième coupleur (K_{3b}) afin de produire des deuxième signaux électriques (S_{3c}, S_{3d}).

4. Dispositif selon les revendications 1 à 3, caractérisé par le fait le coupleur de guides d'ondes (K), au nombre d'au moins un, est constitué par un coupleur 2 x 2 à deux entrées (Eₐ, E_{b}) et deux sorties (Aₐ, A_{b}; A_{c}, A_{d}).

5. Dispositif selon la revendication 1, caractérisé par le fait que l'organe d'atténuation (T) est disposé dans la zone de couplage (X₁) du coupleur de guides d'ondes (K₁).

6. Dispositif selon la revendication 1, caractérisé par le fait que l'organe d'atténuation (T) est constitué par une couche absorbante, une cellule photo-électrique ou un organe découpleur.

7. Dispositif selon les revendications 1 à 3, caractérisé par le fait qu'il est prévu, aux entrées (Eₐ, E_{b}) du coupleur de guides d'ondes, des réseaux de couplage (Gₐ, G_{b}) pour les faisceaux de rayons lumineux (Bₐ, B_{b}).

8. Dispositif selon la revendication 3, caractérisé par le fait que d'autres coupleurs (K_{3c}, K_{3d}) sont disposés aux entrées (A₃ₐ, A_{3b}) du premier coupleur (K₃ₐ) de guides d'ondes, lesquels autres coupleurs sont connectés aux premiers détecteurs (D₃ₐ, D_{3b}).

9. Application du dispositif selon les revendications 1 à 3 dans un dispositif de mesure de position.
